# EUROPÄISCHE PATENTSCHRIFT

(11) **EP 3 663 035 B1**
(45) Veröffentlichungstag und Bekanntmachung des Hinweises auf die Patenterteilung: **14.06.2023**
(21) Anmeldenummer: 19213011.0
(22) Anmeldetag: 02.12.2019
(51) Int. Cl.: B23Q 1/01, B23Q 7/04, B23Q 39/02

(54) **WERKZEUGMASCHINE MIT WERKZEUGSPINDEL UND LADEPORTAL**
MACHINE TOOL WITH TOOL SPINDLE AND LOADING PORTAL
MACHINE-OUTIL DOTÉE D'UNE BROCHE PORTE-OUTIL ET D'UN PORTIQUE DE CHARGEMENT

(30) Priorität: 05.12.2018 DE 102018130925
(43) Veröffentlichungstag der Anmeldung: 10.06.2020
(73) Patentinhaber: CHIRON Group SE, 78532 Tuttlingen (DE)
(72) Erfinder: BOEHM, Thomas, 73054 Eislingen (DE); Peschke, Christoph, 73061 Ebersbach an der Fils (DE); Letsch, Florian, 73655 Plüderhausen (DE); Mueller, Frank, 70188 Stuttgart (DE)
(74) Vertreter: Witte, Weller & Partner Patentanwälte mbB

(56) Entgegenhaltungen:
- EP-A1- 1 834 719
- EP-A1- 2 283 966
- EP-A1- 2 394 779
- WO-A1-2014/188600
- DE-A1-102016 121 200

## Beschreibung

Die vorliegende Erfindung betrifft eine Werkzeugmaschine mit zumindest einer vertikal ausgerichteten, zur Aufnahme von Werkzeugen ausgerüsteten Werkzeugspindel, die in einer vertikalen Richtung und in einer zu der vertikalen Richtung orthogonalen ersten horizontalen Richtung verfahrbar ist, und mit mindestens einer Vorrichtung zum Einspannen von zu bearbeitenden Werkstücken, wobei die Vorrichtung in einer zweiten, zu der ersten horizontalen Richtung orthogonalen zweiten horizontalen Richtung verfahrbar ist, wobei die Werkzeugspindel und die Vorrichtung auf einem gemeinsamen Maschinengestell angeordnet sind, und mit einer Werkstücktransportvorrichtung, wobei genau eine Werkzeugspindel vorgesehen ist, und wobei die Werkstücktransportvorrichtung auf dem Maschinengestell angeordnet und dazu eingerichtet ist, unbearbeitete Werkstücke in die Vorrichtung einzubringen und/oder bearbeitete Werkstücke aus der Vorrichtung zu entnehmen.

Eine derartige Werkzeugmaschine ist aus der EP 2 283 966 A1 bekannt, auf der der Oberbegriff des Anspruchs 1 basiert.

Eine weitere Werkzeugmaschine ist aus der DE 10 2017 105 933 A1 der Anmelderin bekannt.

Die bekannte Werkzeugmaschine umfasst zwei sich in einem gemeinsamen Arbeitsraum gegenübersehende, ortsfeste Portalbalken, an denen jeweils eine Werkzeugspindel vertikal, in z-Richtung, und längs des Portalbalkens in einer ersten horizontalen Richtung, der x-Richtung, verfahrbar ist. Zwischen den Portalbalken sind zwei Vorrichtungen, eine für jede Werkzeugspindel, zum Einspannen von zu bearbeitenden Werkstücken angeordnet, die auf einem gemeinsamen Führungsschienenpaar in der zweiten horizontalen Richtung, der y-Richtung, verfahrbar sind.

Seitlich ragen für jede Werkzeugspindel zwei Werkzeugmagazine in den Arbeitsraum hinein. An dem jeweils unteren Werkzeugmagazin werden Werkzeuge im Pick-up-Verfahren von den Werkzeugspindeln gewechselt. Mittels Umladevorrichtungen können Werkzeuge zwischen dem jeweils oberen und dem darunter liegenden Werkzeugmagazin umgeladen werden.

Zu bearbeitende Werkstücke werden unter dem einen Portalbalken hindurch in die erste Vorrichtung eingebracht, dort mit der ersten Werkzeugspindel teilweise bearbeitet, an die zweite Vorrichtung übergeben, dort mit der zweiten Werkzeugspindel fertig bearbeitet, und dann mit der zweiten Vorrichtung unter dem zweiten Portalbalken hindurch wieder aus dem Arbeitsraum ausgeschleust.

Die beiden Vorrichtungen werden also nicht nur während der Bearbeitung der Werkstücke, sondern auch zum Ein- und Ausschleusen der Werkstücke, also für den gesamten Vorgang des Durchschleusens benötigt.

Die bekannte Werkzeugmaschine ermöglicht die Bearbeitung vielfältiger Werkstücke mit einer großen Anzahl von Werkzeugen, wobei die Werkstücke zur kompletten Bearbeitung von der einen in die andere Vorrichtung übergeben werden.

Diese Werkzeugmaschine wird jedoch im Hinblick auf bestimmte Anwendungen ggf. als zu komplex empfunden, wobei sie zudem eine große Aufstellfläche und für bestimmte Werkstücke eine lange Bearbeitungszeit benötigt.

Aus der DE 103 30 909 A1 ist eine Werkzeugmaschine mit zwei Fahrständern bekannt, die jeweils zwei Werkstückspindeln tragen, zwischen denen sich ein gemeinsamer Arbeitsraum befindet.

Werkstücke werden mittels eines Ladeportals in den und aus dem Arbeitsraum transportiert. Das Ladeportal weist zwei neben der Werkzeugmaschine auf dem Hallenboden stehende Pfosten auf, die an ihren oberen Enden mit einem in x-Richtung verlaufenden Balken verbunden sind, an dem eine Greifereinheit in z- und x-Richtung verfahren wird, die an ihrem unteren Ende einen Werkstückgreifer aufweist.

Bei dieser Werkzeugmaschine sind u.a. die große Aufstellfläche und die bedingt durch das Ladeprotal schlechte Zugänglichkeit des Arbeitsraumes von Nachteil.

Vor diesem Hintergrund liegt der vorliegenden Erfindung die Aufgabe zugrunde, die eingangs erwähnten Werkzeugmaschinen derart weiterzubilden, dass bei konstruktiv einfachem Aufbau eine kompakte Werkzeugmaschine geschaffen wird, die nur eine geringe Aufstellfläche benötigt und bei guter Zugänglichkeit des Arbeitsraumes eine schnelle Werkstückbearbeitung ermöglicht.

Erfindungsgemäß wird diese Aufgabe bei einer Werkzeugmaschine der eingangs genannten Art dadurch gelöst, dass auf dem Maschinengestell zwei in der zweiten horizontalen Richtung verfahrbare Vorrichtungen angeordnet sind, dass die Werkstücktransportvorrichtung einen sich in der zweiten horizontalen Richtung erstreckenden Balken aufweist, an dem zumindest eine in der zweiten horizontalen Richtung fahrbare Greifereinheit gelagert ist, die einen in der vertikalen Richtung fahrbar gelagerten Werkstückgreifer aufweist, und dass an dem Balken eine zweite, in der zweiten horizontalen Richtung fahrbare Greifereinheit gelagert ist, die einen in der vertikalen Richtung fahrbar gelagerten Werkstückgreifer aufweist.

Mit anderen Worten ist die Werkstücktransportvorrichtung dazu eingerichtet, zumindest einen der folgenden Teilschritte auszuführen: Einbringen unbearbeiteter Werkstücke in die Vorrichtung, und Entnehmen bearbeiteter Werkstücke aus der Vorrichtung.

Die neue Werkzeugmaschine geht von der Erkenntnis der Erfinder aus, dass das Durchschleusen der Werkstücke mit Hilfe der Vorrichtungen in vielen Fällen unpraktisch und langsam ist, weil die Vorrichtungen sozusagen zwei Aufgaben erfüllen müssen, nämlich einmal das Halten der Werkstücke währen der Bearbeitung, und zum anderen den Transport des unbearbeiteten bzw. bearbeiteten Werkstückes.

Ferner haben die Erfinder erkannt, dass für viele Werkstücke die Bearbeitung mit einer Werkzeugspindel ausreichend ist. Mit anderen Worten weist die Werkzeugmaschine gemäß diesem Aspekt nicht mehr als eine Werkzeugspindel auf. Es handelt sich also nicht um eine Doppelspindelmaschine oder dgl.

Die neue Werkzeugmaschine ist kompakt aufgebaut und benötigt eine geringe Aufstellfläche, weil in ihr nur eine Werkzeugspindel und eine oder zwei Vorrichtungen sowie eine auf dem Maschinengestell angeordnete Werkstücktransportvorrichtung vorgesehen sind, die dazu eingerichtet ist, unbearbeitete Werkstücke in die Vorrichtung einzubringen und/oder bearbeitete Werkstücke aus der Vorrichtung zu entnehmen.

Der Transport der Werkstücke mittels der dafür speziell angepassten Werkstücktransportvorrichtung kann dabei schneller erfolgen als mit den Vorrichtungen, so dass insgesamt die Bearbeitungszeit für bestimmte Werkstücke kürzer ist als bei der gattungsbildenden Werkzeugmaschine.

In vielen Fällen übernimmt die Werkstücktransportvorrichtung nur den Transport in die oder aus der Vorrichtung, wenn nämlich der Transport der unbearbeiteten Werkstücke in die Vorrichtung oder der bearbeiteten Werkstücke aus der Vorrichtung so erfolgt, wie dies in der eingangs erwähnten DE 10 2017 105 933 A1 beschrieben ist. Die Zufuhr der unbearbeiteten Werkstücke kann auch mit einem Stangenlader erfolgen.

Die der Erfindung zugrundeliegende Aufgabe wird auf diese Weise vollkommen gelöst.

Besonders bevorzugt ist es, wenn auf dem Maschinengestell ein sich in der ersten horizontalen Richtung erstreckender, feststehender Portalbalken angeordnet ist, an dem die Werkzeugspindel in der vertikalen und der ersten horizontalen Richtung verfahrbar gelagert ist.

Hier ist von Vorteil, dass die neue Werkzeugmaschine kompakt und steif aufgebaut ist, was eine schnelle Bearbeitung der Werkstücke ermöglicht.

Da auf dem Maschinengestell zwei in der zweiten horizontalen Richtung verfahrbare Vorrichtungen angeordnet sind, ist es bevorzugt, dass auf dem Maschinengestell vorzugsweise eine sich in der zweiten horizontalen Richtung erstreckende Führung angeordnet ist, an der die beiden Vorrichtungen gelagert sind.

Weil die neue Werkzeugmaschine zwei Vorrichtungen zum Einspannen von Werkstücken aufweist, können die Werkstücke zwischen den Vorrichtungen übergeben werden, so dass auch komplexe Werkstücke in der neuen Werkzeugmaschine schnell fertig bearbeitet werden können.

Die Übergabe der Werkstücke von der einen in die andere Vorrichtung kann beispielsweise mithilfe eines in die Werkzeugspindel eingespannten Spindelgreifers oder über die Werkstücktransportvorrichtung erfolgen.

Weil zudem beide Vorrichtungen vorzugsweise auf einer Führung angeordnet sind, ist der Aufbau der neuen Werkzeugmaschine kompakt und konstruktiv einfach.

Alternativ ist es auch möglich, zumindest eine der beiden Vorrichtungen so auszugestalten, dass sie um eine horizontal verlaufende Achse schwenkbar ist, die sich vorzugsweise in der ersten horizontalen Richtung erstreckt.

Hier ist zum einen von Vorteil, dass das Werkstück unmittelbar von der ersten in die zweite Vorrichtung übergeben werden kann, was eine schnelle Bearbeitung der Werkstücke ermöglicht.

Weiter ist von Vorteil, dass ein in die Vorrichtung eingespanntes Werkstück an allen Seiten und Oberflächenbereichen, die nicht in die Vorrichtung eingespannt sind, bearbeitet werden kann. Dies ermöglicht eine vollständige schnelle Bearbeitung eines Werkstückes in der neuen Werkzeugmaschine.

Allgemein ist es bevorzugt, wenn zumindest ein stationär angeordnetes Werkzeugmagazin für einen Werkzeug-wechsel im Pick-up-Verfahren vorgesehen ist.

Hier ist von Vorteil, dass jederzeit ein Werkzeugwechsel möglich ist. Es ist nicht erforderlich, dass das Werkzeugmagazin dazu zunächst in den Arbeitsraum hineingefahren wird. Auch dies sorgt für eine geringe Gesamtbearbeitungszeit eines Werkstückes. Zu dem Werkzeugwechsel fährt die Werkzeugspindel ggf. aus dem Arbeitsraum heraus, wozu ggf. eine Tür in der Verkleidungswand geöffnet wird, die das innere Ende des Werkzeugmagazins von dem Arbeitsraum abtrennt.

Wie es bereits aus der eingangs erwähnten DE 10 2017 105 933 A1 bekannt ist, kann auch hier oberhalb des Werkzeugmagazine ein weiteres Werkzeugmagazin angeordnet sein, wobei eine Umladevorrichtung vorgesehen sein kann, um Werkzeuge zwischen dem Werkzeugwechselmagazin und dem darüber angeordneten Werkzeugspeichermagazin umzuladen.

Hier ist von Vorteil, dass die Zahl der zur Verfügung stehenden Werkzeuge weiter erhöht werden kann, was die Flexibilität der Bearbeitung eines Werkstückes weiter erhöht.

Die Werkzeugspindel muss zudem nur das weiter unten gelegene Werkzeugmagazin anfahren. Dies bedeutet, dass die Werkzeugspindel nur kurze Hübe in der vertikalen und der horizontalen Richtung durchführen muss, um Werkzeuge zu wechseln und dann das Werkstück wieder anzufahren. Diese "kurzen Z- und Y-Achsen" ermöglichen nicht nur einen sehr steifen und kompakten Aufbau der neuen Werkzeugmaschine, sie erlauben auch eine geringe Span-zu-Span-Zeit, was wiederum eine schnelle Bearbeitung der Werkstücke ermöglicht.

Die Werkstücktransportvorrichtung weist nen sich in der zweiten horizontalen Richtung erstreckenden Balken auf, an dem zumindest eine in der zweiten horizontalen Richtung fahrbare Greifereinheit gelagert ist, die einen in der vertikalen Richtung fahrbar gelagerten Werkstückgreifer aufweist, wobei an dem Balken eine zweite, in der zweiten horizontalen Richtung fahrbare Greifereinheit gelagert ist, die einen in der vertikalen Richtung fahrbar gelagerten Werkstückgreifer aufweist.

Diese Werkstücktransportvorrichtung ermöglicht ein schnelles Beladen und Entladen der Vorrichtungen. Während die eine Greifereinheit ein unbearbeitetes Werkstück trägt, kann die andere ein bearbeitetes Werkstück aus einer Vorrichtung entnehmen. Wenn nur eine Vorrichtung vorgesehen ist, wird aus dieser zuerst das zuvor bearbeitete Werkstück entnommen, bevor dann ohne große Fahrwege, also schnell, das als nächstes zu bearbeitende Werkstück eingesetzt wird.

Da zwei Vorrichtungen vorgesehen sind, können Entnahme und Einsetzen zeitgleich oder nahezu zeitgleich erfolgen, was insgesamt die Bearbeitungszeit für ein Werkstück weiter reduziert.

Dabei ist es bevorzugt, wenn der Balken über zumindest einen Ständer auf dem Maschinengestell und vorzugsweise über zumindest einen Ständer in der zweiten horizontalen Richtung neben dem Maschinengestell abgestützt ist.

Hier ist von Vorteil, dass sich das so gebildete Ladeprotal nicht in x-sondern in y-Richtung erstreckt, so dass der Arbeitsraum von der Seite her zugänglich bleibt. zudem führt dies zu einer kompakten Bauweise mit geringer Aufstellfläche. Der zweite Ständer ist dabei in vielen Fällen nicht erforderlich, so dass die neue Werkzeugmaschine dann auch in y-Richtung kurz baut.

Vor diesem Hintergrund betrifft die vorliegende Erfindung ein Verfahren zur Bearbeitung eines Werkstückes auf einer offenbarungsgemäßen Werkzeugmaschine, mit den Schritten:
a) Ergreifen eines unbearbeiteten Werkstückes mit einem Werkstückgreifer, Einbringen des Werkstückes in eine erste Vorrichtung, und Einspannen des Werkstückes in der ersten Vorrichtung,
b) Bearbeiten des Werkstückes mit in eine Werkzeugspindel eingespannten Werkzeugen, und
c) Entnehmen und Ablegen des fertig bearbeiteten Werkstückes mit dem Werkstückgreifer.

Dabei ist es bevorzugt, wenn im Schritt b) das in der ersten Vorrichtung eingespannte Werkstück nach einer Teilbearbeitung in eine zweite Vorrichtung übergeben wird, wo es eingespannt und fertig bearbeitet wird, und/oder im Schritt b) das in der ersten Vorrichtung eingespannte Werkstück mittels des Werkstückgreifers in die zweite Vorrichtung übergeben wird, und/oder im Schritt b) das in der ersten Vorrichtung eingespannte Werkstück unmittelbar an die zweite Vorrichtung übergeben wird, wozu beide Vorrichtungen um eine in einer horizontalen Richtung verlaufende Achse geschwenkt und in einer zweiten horizontalen Achse aufeinander zu fahren.

Wenn zwei Werkstückgreifer vorgehen sind, ist es bevorzugt, wenn im Schritt c) das fertig bearbeitete Werkstück mit einem der beiden Werkstückgreifer aus der zweiten Vorrichtung entnommen und ein unbearbeitetes Werkstück mit dem anderen der beiden Werkstückgreifer in die erste Vorrichtung eingebracht wird, und dann der eine Werkstückgreifer das bearbeitete Werkstück ablegt und der andere Werkstückgreifer ein unbearbeitetes Werkstück aufnimmt.

Diese Verfahrensschritte führen schon einzeln für sich genommen, insbesondere aber zusammen zu einem schnellen Werkstückwechsel und damit zu einer kurzen Bearbeitungszeit, wie es oben im Zusammenhang mit den entsprechenden gegenständlichen Merkmalen bereits geschildert wurde.

Ein Ausführungsbeispiel der Erfindung ist in der Zeichnung dargestellt und wird in der nachfolgenden Beschreibung näher erläutert. Es zeigen:
- Fig. 1: eine perspektivische, schematische Darstellung der neuen Werkzeugmaschine;
- Fig. 2: eine schematische Seitenansicht der Werkzeugmaschine aus Fig. 1, gesehen in x-Richtung;
- Fig. 3: eine schematische Seitenansicht der Werkzeugmaschine aus Fig. 1, gesehen in y-Richtung; und
- Fig. 4: in einer Ansicht wie Fig. 2 die neue Werkzeugmaschine mit einem Stangenlader.

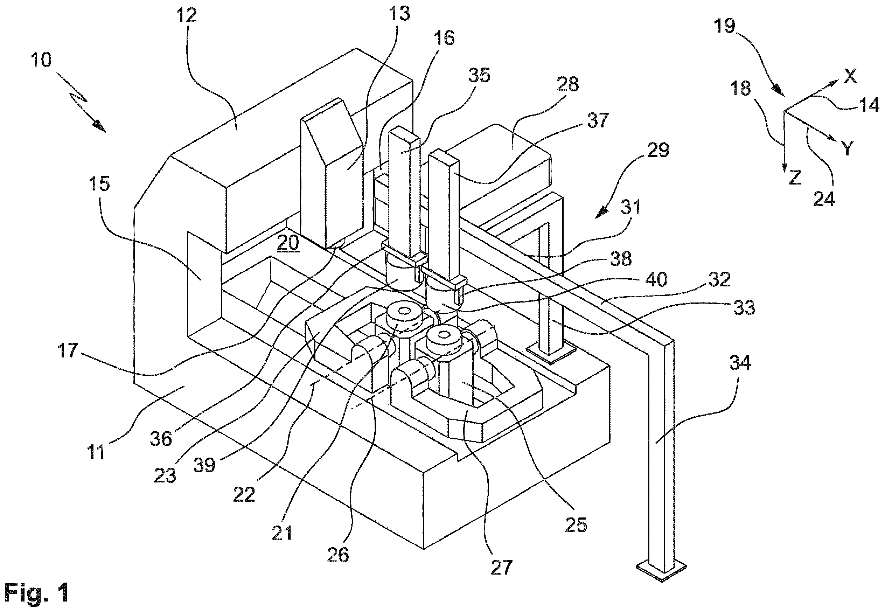

In Fig. 1 ist in nicht maßstabsgetreuer, perspektivischer Ansicht eine Werkzeugmaschine 10 gezeigt, die ein Maschinengestell 11 aufweist. Die einzelnen Komponenten der Werkzeugmaschine 10 sind lediglich schematisch angedeutet, weil nicht die konkrete Realisierung, sondern die Anordnung und das Zusammenwirken entscheidend für die Vorteile sind, die mit dem neuen Aufbau der Werkzeugmaschine 10 erreicht werden.

Über dem Maschinengestell 11 ist ein Portalbalken 12 angeordnet, der einen Spindelkopf 13 trägt, der sich längs des Portalbalkens 12 in einer ersten horizontalen Richtung 14, der x-Richtung, verfahren lässt.

Von dem Maschinengestell 11 stehen zwei Ständer 15, 16 hoch, an deren oberen Enden der Portalbalken 12 angeordnet ist. Maschinengestell 11, Ständer 15, 16 und Portalbalken 12 sind entweder einstückig miteinander ausgebildet oder werden als gesonderte Bauteile gefertigt und nachträglich fest miteinander verbunden, beispielsweise miteinander verklebt.

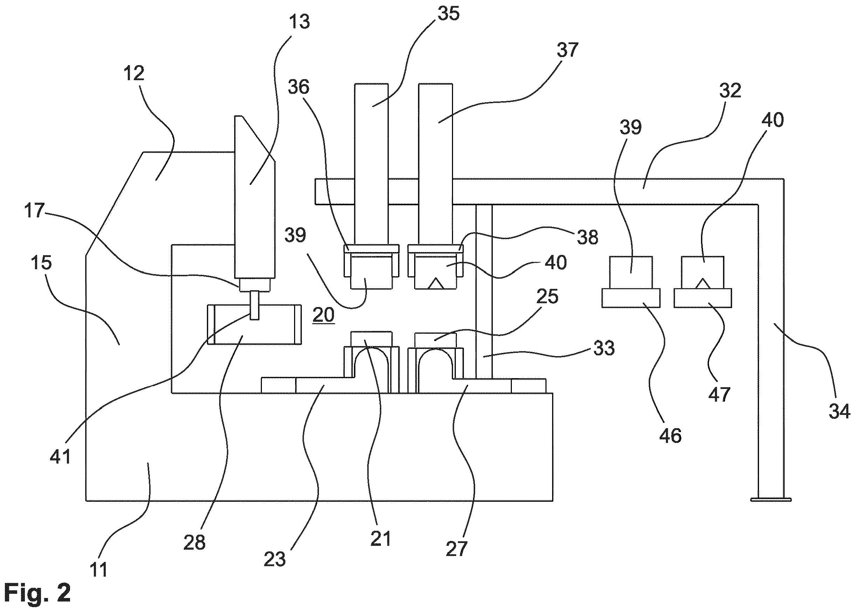

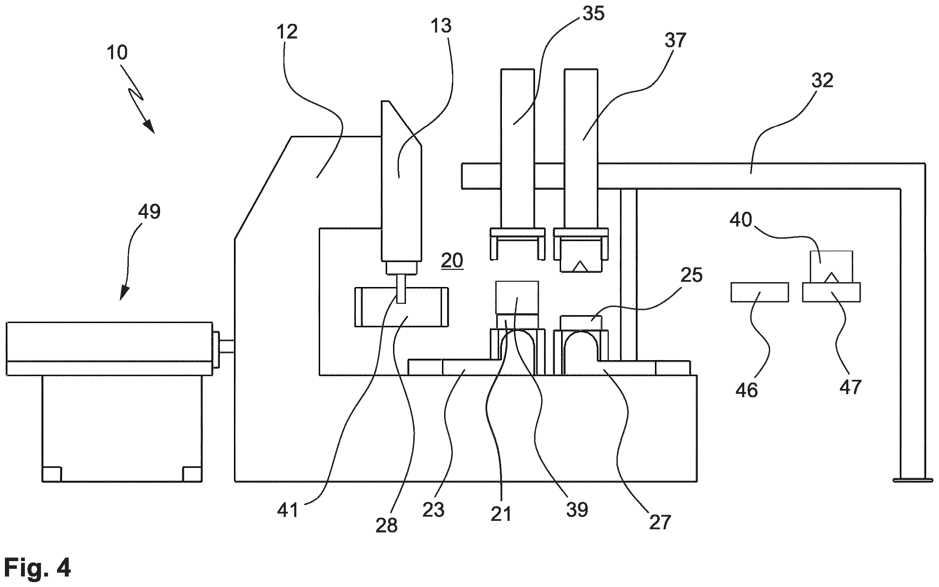

Der Spindelkopf 13 trägt eine drehbare, also um eine Spindelachse rotierende Werkzeugspindel 17, die in die vertikale Richtung 18, also in z- Richtung, verfahrbar ist, und in die Werkzeuge 41 (Fig. 2 und 4) eingespannt werden, die zum Bearbeiten von Werkstücken 39, 40 in einem bei 20 angedeuteten Arbeitsraum dienen.

Oben rechts in Fig. 1 ist noch ein Koordinatenkreuz 18 gezeigt, das die Lage der Richtungen 14 und 18 verdeutlicht.

Die Werkstücke werden zur Bearbeitung in eine schematisch dargestellte erste Vorrichtung 21 eingespannt, die um eine in x-Richtung 14 verlaufende Achse 22 schwenkbar an einem ersten Schlitten 23 gelagert ist, und die die Werkstücke 39, 40 in an sich bekannter Weise zur Positionierung um ihre Längsachsen drehen und/oder für eine Drehbearbeitung in Rotation versetzen kann.

Der Schlitten 23 ist in einer zweiten, zu der ersten horizontalen Richtung 14 orthogonalen horizontalen Richtung 24 verfahrbar, die auch als y-Achse bezeichnet wird und ebenfalls in dem Koordinatenkreuz 19 zu sehen ist. Auf diese Weise können in die Werkzeugspindel 17 eingespannte Werkzeuge 41 und in die Vorrichtung 21 eingespannte Werkstücke 39, 40 in allen drei Raumrichtungen 14, 18, 24 zueinander verfahren werden.

In dem gezeigten Ausführungsbeispiel ist eine zweite Vorrichtung 25 vorgesehen, die ebenfalls um eine in x-Richtung 14 verlaufende Achse 26 schwenkbar an einem zweiten Schlitten 25 gelagert ist, und die die Werkstücke 39, 40 zur Positionierung um ihre Längsachsen drehen und/oder für eine Drehbearbeitung in Rotation versetzen kann. Auch der zweite Schlitten 25 ist in der y-Richtung 24 verfahrbar.

Der Werkzeugspindel 17 ist ein Werkzeugmagazin 28 zugeordnet, das mit seinem inneren Ende in dem Arbeitsraum 20 angeordnet ist. In dem Werkzeugmagazin 28 sind in an sich bekannter Weise mehrere Werkzeuge 41 in sogenannten Magazinplätzen vorrätig gehalten, die innerhalb eines Werkzeugmagazins 28 so bewegt werden können, dass sie an dem inneren Ende zum Werkzeugwechsel zur Verfügung stehen.

Durch Verfahren des Spindelkopfes 13 in x-Richtung 14 sowie z-Richtung 18 kann die Werkzeugspindel 17 das innere Ende des Werkzeugmagazins 28 anfahren und dort Werkzeuge 41 im Pick-Up-Verfahren in freie Magazinplätze ablegen und aus bestückten Magazinplätzen neue Werkzeuge 41 aufnehmen.

Für den Transport von Werkstücken in den Arbeitsraum 20 hinein und aus ihm heraus ist eine auf dem Maschinengestell angeordnete Werkstücktransportvorrichtung 29 in Form eines Ladeportals 31 vorgesehen, das einen waagerechten Balken 32 umfasst, der sich in y-Richtung 24 erstreckt und über einen Ständer 33 auf dem Maschinengestell 11 abgestützt ist.

Aus Stabilitätsgründen kann es erforderlich sein, den Balken 32 über einen zweiten Ständer 34 abzustützen, der ebenfalls auf dem Maschinengestell 11 oder - wie in den Fig. 1 und 2 gezeigt - auf dem Hallenboden neben der Werkzeugmaschine 10 angeordnet sein kann.

An dem Balken 32 ist eine in y-Richtung fahrbare erste Greifereinheit 35 gelagert, die einen in z-Richtung 14 fahrbar gelagerten Werkstückgreifer 36 aufweist.

In dem gezeigten Ausführungsbeispiel ist an dem Balken 32 ist eine in y-Richtung fahrbare zweite Greifereinheit 37 gelagert, die einen in z-Richtung 14 fahrbar gelagerten zweiten Werkstückgreifer 38 aufweist.

Der Werkstückgreifer 36 hat hier ein unbearbeitetes Werkstück 39 erfasst, dass als nächstes in die erste Vorrichtung 21 eingesetzt werden soll, während der Werkstückgreifer 38 ein bearbeitetes Werkstück 40 erfasst hat, dass er soeben aus der zweiten Vorrichtung 25 entnommen hat.

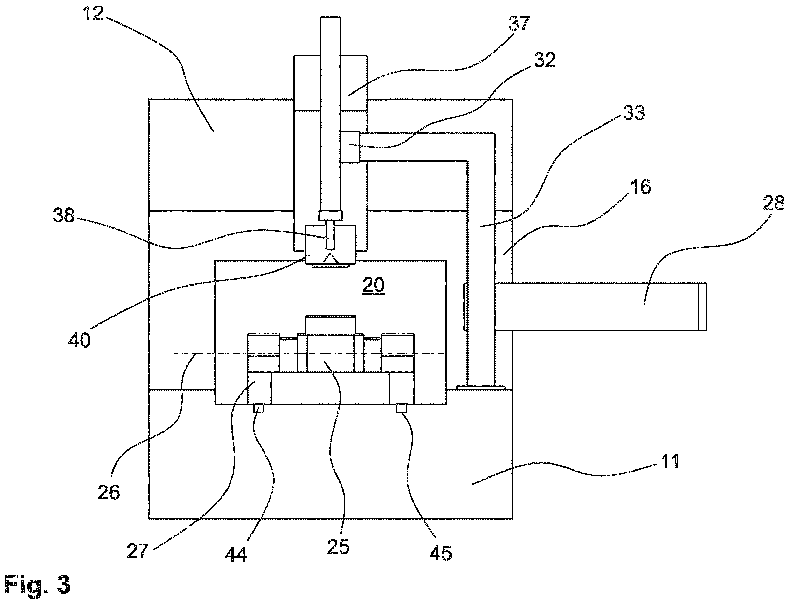

Fig. 2 zeigt eine Seitenansicht der Werkzeugmaschine 10 aus Fig. 1, gesehen längs der x-Richtung 14 und Fig. 3 eine Seitenansicht der Werkzeugmaschine 10 aus Fig. 1, gesehen längs der y-Richtung 24.

In Fig. 3 sind zwei Führungen 44, 45 für die beiden Schlitten 23, 27 zu erkennen, auf denen diese in y-Richtung 24 verfahren werden können. Beide Schlitten 23, 27 laufen also auf denselben Führungen 44, 45.

Ferner zeigt Fig. 2 noch ein Förderband 46 für noch zu bearbeitende Werkstücke 39 und ein Förderband 47 für bereits fertig bearbeitete Werkstücke 40.

Ein mit Hilfe des Ladeportals 31 von dem Förderband 46 in den Arbeitsraum 20 eingebrachtes und in die erste Vorrichtung 21 eingespanntes Werkstück 39 wird mit dem Werkzeug 41, das in die Werkzeugspindel 17 eingespannt ist, so weit bearbeitet, bis sämtliche aus der Vorrichtung 21 herausragenden Seiten und Flächen bearbeitet sind. Dazu wird die Vorrichtung 21 in y-Richtung 24 verfahren und ggf. um die Achse 22 geschwenkt, ferner wird die Werkzeugspindel 17 in der x- und z-Achse verfahren.

Wenn die Teilbearbeitung des Werkstückes 39 abgeschlossen ist, werden die Vorrichtungen 21, 25 um ihre Achsen 22, 26 so geschwenkt, dass ihre nicht weiter dargestellten Werkzeugspannvorrichtungen aufeinander zu zeigen. Dann fährt die zweite Vorrichtung 25 in Richtung der ersten Vorrichtung 21 und/oder die erste Vorrichtung 21 in Richtung der zweiten Vorrichtung 25, woraufhin das Werkstück 39 an die zweite Vorrichtung 25 übergeben wird, und dort als teilbearbeitetes Werkstück zur weiteren Bearbeitung zur Verfügung steht.

Durch Verfahren der zweiten Vorrichtung 25 in y-Richtung 24 und/oder Verschwenken der zweiten Vorrichtung 25 um die Achse 26 sowie Verfahren der Werkzeugspindel 17 in der x- und z-Achse werden alle noch nicht bearbeitenden Seiten und Flächen fertig bearbeitet, bis sich in der zweiten Vorrichtung 25 ein fertig bearbeitete Werkstück 40 befindet.

Dieses fertig bearbeitete Werkstück 40 wird jetzt mit der zweiten Greifereinheit 37 ergriffen und aus dem Arbeitsraum 20 ausgeschleust und auf dem Förderband 47 abgelegt, währen die erste Greifereinheit 35 ein neues Werkstück 39 in die zweite Vorrichtung 25 einsetzt.

Die neue Werkzeugmaschine kann auch nur mit der ersten Vorrichtung 21 und der ersten Greifereinheit 35 ausgestattet sein, was aber nicht zu der vorliegenden Erfindung gehört. In diesem Fall wird das fertig bearbeitete Werkstück 40 zunächst von der Greifereinheit 35 auf dem Förderband 47 abgelegt, bevor sie ein neues Werkstück 39 von dem Förderband 46 ergreifen und in die erste Vorrichtung 21 einbringen kann. Zwischen dem Ende der Bearbeitung eines Werkstückes 40 und dem Beginn der Bearbeitung eines neuen Werkstückes 39 muss die Greifereinheit 35 also aus dem Arbeitsraum 20 heraus und wieder in ihn hinein fahren.

Das teilbearbeitete Werkstück 39 kann dabei ggf. mit einem in die Werkzeugspindel 17 eingewechselten Spindelgreifer oder mit der Greifereinheit 35 aus der Vorrichtung 21 entnommen, gedreht und so wieder in die Vorrichtung 21 eingesetzt werden, dass nun die noch nicht bearbeitenden Seiten und Flächen frei zugänglich sind und fertig bearbeitet werden können.

Wenn nur eine Greifereinheit 35 aber zwei Vorrichtungen 21, 25 vorgesehen sind, was aber nicht zu der vorliegenden Erfindung gehört, kann das teilbearbeitete Werkstück 39 - wie oben beschreiben - zwischen den Vorrichtungen 21, 25 übergeben werden. Die Greifereinheit 35 muss zwischen dem Ende der Bearbeitung eines Werkstückes 40 und dem Beginn der Bearbeitung eines neuen Werkstückes 39 dann den Arbeitsraum 20 nicht verlassen, denn sie kann ein neues Werkstück 39 von dem Förderband 46 in eine der beiden Vorrichtungen 21, 25 einlegen und dann sozusagen auf dem Rückweg ein bearbeitetes Werkstück 40 aus der andere Vorrichtung 25, 21 entnehmen und aus dem Arbeitsrum 20 mitnehmen.

Wenn zwar zwei Greifereinheiten 35, 37, aber nur eine Vorrichtung 21 vorgesehen sind, was aber nicht zu der vorliegenden Erfindung gehört, kann eine der Greifereinheiten 35, 37 mit einem neuen Werkstück 39 in den Arbeitsraum 20 fahren und es sofort in der Vorrichtung 21 ablegen, nachdem zuvor die andere Greifereinheit 37, 35 das fertig bearbeitete Werkstück 40 aus der Vorrichtung 21 entnommen hatte.

Ein teilbearbeitete Werkstück 39 muss dabei ggf. wieder mit einem Spindelgreifer oder mit einer der Greifereinheiten 35, 37 aus der Vorrichtung 21 entnommen, gedreht und so wieder in die Vorrichtung 21 eingesetzt werden, dass die noch nicht bearbeitenden Seiten und Flächen frei zugänglich sind und fertig bearbeitet werden können.

Der Transport von unbearbeiteten Werkstücken 39 in den Arbeitsraum 20 hinein kann alternativ zu dem Ladeprotal 31 auch mit einem Stangenlader 49 erfolgen, wie er in Fig. 4 in y- Richtung 24 links neben der Werkzeugmaschine 10 dargestellt ist. Von dem Stangenlader 49 werden Werkstückstangen in den Arbeitsraum 20 geschoben und dort mit ihrem freien Ende in die dazu ganz nach links unter dem Portalbalken 12 gefahrene erste Vorrichtung 21 eingespannt, die um die Achse 22 so geschwenkt wurde, dass sie auf den Stangenlader 49 zu weist.

Das eingespannte vordere Ende der Werkstückstange wird dann entweder zunächst von dem Rest der Werkstückstange abgetrennt und als unbearbeitetes Werkstück 39 weiter bearbeitet. Je nachdem, ob eine Vorrichtung 21 oder zwei Vorrichtungen 21, 25 vorhanden sind, wird das Werkstück 39 dann so bearbeitet und ausgeschleust wie zuvor beschrieben.

Es ist auch möglich, das freie Ende der Werkstückstange zu bearbeiten, während es noch mit der Werkstückstange verbunden ist. Dann sind zwei Vorrichtungen 21, 25 erforderlich.

Die Werkstückstange wird also in die erste Vorrichtung 21 aufgenommen und insgesamt geschwenkt und bewegt, während ihr freies Ende als Werkstück 39 bearbeitet wird. Danach werden die beiden Vorrichtungen 21, 25 aufeinander zu geschwenkt, und das freie Ende der Werkstückstange wird in die zweite Vorrichtung 25 eingespannt. Danach wird das freie Ende von der restlichen Werkstückstange abgetrennt, und als teilbearbeitetes Werkstück 39 in der zweiten Vorrichtung 25 fertig bearbeitet. Das freie Ende der in der ersten Vorrichtung 21 verbleibenden Werkstückstange wird wieder bearbeitet, während es noch mit der Werkstückstange verbunden ist.

Wenn das Werkstück 39 fertig bearbeitet ist, befindet es sich entweder noch in der ersten Vorrichtung 21 oder in der zweiten Vorrichtung 25. Von dort wird das fertig bearbeitete Werkstück 40 dann mit der ersten Greifereinheit 35 entnommen und auf dem Förderband 47 abgelegt.

Wenn die Werkzeugmaschine 10 auf diese Weise eingesetzt wird, werden die zweite Greifereinheit 37 und das Förderband 46 nicht benötigt, wobei ggf. auch die zweite Vorrichtung 25 nicht benötigt wird. Dennoch muss die Werkzeugmaschine 10 diese Komponenten einzeln und insgesamt aufweisen, so wie es in Fig. 4 gezeigt ist, damit sie flexible auch für andere Bearbeitungsvorgänge eingesetzt werden kann.

## Patentansprüche

1. Werkzeugmaschine mit zumindest einer vertikal ausgerichteten, zur Aufnahme von Werkzeugen (41) ausgerüsteten Werkzeugspindel (17), die in einer vertikalen Richtung (18) und in einer zu der vertikalen Richtung (18) orthogonalen ersten horizontalen Richtung (14) verfahrbar ist, und mit zumindest einer Vorrichtung (21) zum Einspannen von zu bearbeitenden Werkstücken (39), wobei die Vorrichtung (21) in einer zweiten, zu der ersten horizontalen Richtung (14) orthogonalen zweiten horizontalen Richtung (24) verfahrbar ist, wobei die Werkzeugspindel (17) und die Vorrichtung (21) auf einem gemeinsamen Maschinengestell (11) angeordnet sind, und mit einer Werkstücktransportvorrichtung (29), wobei genau eine Werkzeugspindel (17) vorgesehen ist, und wobei die Werkstücktransportvorrichtung (29) auf dem Maschinengestell (11) angeordnet und dazu eingerichtet ist, unbearbeitete Werkstücke (39) in die Vorrichtung (21) einzubringen und/oder bearbeitete Werkstücke (40) aus der Vorrichtung (21) zu entnehmen,
**dadurch gekennzeichnet,**
**dass** auf dem Maschinengestell (11) eine zweite in der zweiten horizontalen Richtung (24) verfahrbare Vorrichtung (25) angeordnet ist,
**dass** die Werkstücktransportvorrichtung (29) einen sich in der zweiten horizontalen Richtung (24) erstreckenden Balken (32) aufweist, an dem zumindest eine in der zweiten horizontalen Richtung fahrbare Greifereinheit (35) gelagert ist, die einen in der vertikalen Richtung (18) fahrbar gelagerten Werkstückgreifer (36) aufweist, und
**dass** an dem Balken (32) eine zweite, in der zweiten horizontalen Richtung (24) fahrbare Greifereinheit (37) gelagert ist, die einen in der vertikalen Richtung (18) fahrbar gelagerten Werkstückgreifer (38) aufweist.

2. Werkzeugmaschine nach Anspruch 1, **dadurch gekennzeichnet, dass** auf dem Maschinengestell (11) ein sich in der ersten horizontalen Richtung (14) erstreckender, feststehender Portalbalken (12) angeordnet ist, an dem die Werkzeugspindel (17) in der vertikalen und der ersten horizontalen Richtung (14, 18) verfahrbar gelagert ist.

3. Werkzeugmaschine nach Anspruch 1 oder 2, **dadurch gekennzeichnet, dass** auf dem Maschinengestell (11) eine sich in der zweiten horizontalen Richtung (24) erstreckende Führung (44, 45) angeordnet ist, an der die beiden Vorrichtungen (21, 25) gelagert sind.

4. Werkzeugmaschine nach einem der Ansprüche 1 bis 3, **dadurch gekennzeichnet, dass** zumindest eine der beiden Vorrichtungen (21, 25) um eine horizontal verlaufende Achse (22, 26) schwenkbar ist.

5. Werkzeugmaschine nach Anspruch 4, **dadurch gekennzeichnet, dass** sich die horizontal verlaufende Achse (22, 26) in der ersten horizontalen Richtung (14) erstreckt.

6. Werkzeugmaschine nach einem der Ansprüche 1 bis 5, **dadurch gekennzeichnet, dass** zumindest ein stationär angeordnetes Werkzeugmagazin (28) für einen Werkzeugwechsel im Pick-Up-Verfahren vorgesehen ist.

7. Werkzeugmaschine nach einem der Ansprüche 1 bis 6, **dadurch gekennzeichnet, dass** der Balken (32) über zumindest einen Ständer (33) auf dem Maschinengestell (11) abgestützt ist.

8. Werkzeugmaschine nach einem der Ansprüche 1 bis 7, **dadurch gekennzeichnet, dass** der Balken (32) über zumindest einen Ständer (34) in der zweiten horizontalen Richtung (24) neben dem Maschinengestell (11) abgestützt ist.

9. Werkzeugmaschine nach einem der Ansprüche 1 bis 8, **dadurch gekennzeichnet, dass** die Werkstücktransportvorrichtung (29) dazu eingerichtet ist, unbearbeitete Werkstücke (39) in die Vorrichtung (21) einzubringen und bearbeitete Werkstücke (40) aus der Vorrichtung (21) zu entnehmen.

10. Verfahren zur Bearbeitung eines Werkstückes (39) auf einer Werkzeugmaschine nach einem der Ansprüche 1 bis 9, mit den Schritten:
a) Ergreifen eines unbearbeiteten Werkstückes (39) mit einem Werkstückgreifer (36, 38), Einbringen des Werkstückes (39) in eine erste Vorrichtung (21), und Einspannen des Werkstückes (39) in der ersten Vorrichtung (21),
b) Bearbeiten des Werkstückes (39) mit in eine Werkzeugspindel (17) eingespannten Werkzeugen (41), und
c) Entnehmen und Ablegen des fertig bearbeiteten Werkstückes (40) mit dem Werkstückgreifer (36, 38).

11. Verfahren nach Anspruch 10, **dadurch gekennzeichnet, dass** im Schritt b) das in der ersten Vorrichtung (21) eingespannte Werkstück (39) nach einer Teilbearbeitung in die zweite Vorrichtung (25) übergeben wird, wo es eingespannt und fertig bearbeitet wird.

12. Verfahren nach Anspruch 11, **dadurch gekennzeichnet, dass** im Schritt b) das in der ersten Vorrichtung (21) eingespannte Werkstück (39) mittels des Werkstückgreifers (36, 38) in die zweite Vorrichtung (25) übergeben wird.

13. Verfahren nach Anspruch 11, **dadurch gekennzeichnet, dass** im Schritt b) das in der ersten Vorrichtung (21) eingespannte Werkstück (39) unmittelbar an die zweite Vorrichtung (25) übergeben wird, wozu beide Vorrichtungen (21, 25) um eine in einer horizontalen Richtung (14) verlaufende Achse (22, 26) geschwenkt werden und in einer zweiten horizontalen Achse (24) aufeinander zu fahren.

14. Verfahren nach Anspruch 12 oder 13, **dadurch gekennzeichnet, dass** im Schritt c) das fertig bearbeitete Werkstück (40) mit einem der beiden Werkstückgreifer (36, 38) aus der zweiten Vorrichtung (25) entnommen und ein unbearbeitetes Werkstück (39) mit dem anderen der beiden Werkstückgreifer (36, 38) in die erste Vorrichtung (21) eingebracht wird, und dann der eine Werkstückgreifer (36, 38) das bearbeitete Werkstück (40) ablegt und der andere Werkstückgreifer (36, 38) ein unbearbeitetes Werkstück (39) aufnimmt.

## Claims

1. A machine tool, comprising at least one vertically aligned tool spindle (17), which is equipped to accommodate tools (41), and which is movable in a vertical direction (18) and in a first horizontal direction (14) orthogonal to the vertical direction (18), and comprising at least one jig (21) for clamping workpieces (39) to be machined, wherein the jig (21) is movable in a second horizontal direction (24) orthogonal to the first horizontal direction (14), wherein the tool spindle (17) and the jig (21) are arranged on a common machine frame (11), and comprising a workpiece transport device (29), wherein exactly one tool spindle (17) is provided, and wherein the workpiece transport device (29) is arranged on the machine frame (11) and is adapted to introduce unmachined workpieces (39) into the jig (21) and/or to remove machined workpieces (40) from the jig (21)
**characterized in that**
a first jig (25), which is movable in the second horizontal direction (24), is arranged on the machine frame (11),
the workpiece transport device (29) comprises a beam (32), which extends in the second horizontal direction (24), and on which there is mounted at least one gripper unit (35), which is movable in the second horizontal direction and comprises a workpiece gripper (36), which is mounted in a manner movable in the vertical direction (18), and
a second gripper unit (37), which is movable in the second horizontal direction (24) is mounted on the beam (32) and which comprises a workpiece gripper (38), which is mounted to be movable in the vertical direction (18).

2. The machine tool according to claim 1, **characterized in that** a fixed portal beam (12) extending in the first horizontal direction (14) is arranged on the machine frame (11), on which portal beam the tool spindle (17) is mounted so as to be movable in the vertical direction (18) and the first horizontal direction (14).

3. The machine tool according to claim 1 or 2, **characterized in that** a guide (44, 45), which extends in the second horizontal direction (24), and on which the two jigs (21, 25) are mounted, is arranged on the machine frame (11).

4. The machine tool according to any one of claims 1 to 3, **characterized in that** at least one of the two jigs (21, 25) is pivotable about a horizontally extending axis (22, 26).

5. The machine tool according to claim 4, **characterized in that** the horizontally extending axis (22, 26) extends in the first horizontal direction (14).

6. The machine tool according to any one of claims 1 to 5, **characterized in that** at least one stationary tool magazine (28) is provided for a tool change according to the pick-up method.

7. The machine tool according to any one of claims 1 to 6, **characterized in that** the beam (32) is supported on the machine frame (11) via at least one post (33).

8. The machine tool according to any one of claims 1 to 7, **characterized in that** the beam (32) is supported via at least one post (34) in the second horizontal direction (24) next to the machine frame (11).

9. The machine tool according to any one of claims 1 to 8, **characterized in that** the workpiece transport device (29) is configured to introduce unmachined workpieces (39) into the device (21) and to remove machined workpieces (40) from the device (21).

10. A method for machining a workpiece (39) on a machine tool according to any one of claims 1 to 9, comprising the following steps:
a) gripping an unmachined workpiece (39) with a workpiece gripper (36, 38), introducing the workpiece (39) into a first jig (21), and clamping the workpiece (39) in the first jig (21),
b) machining the workpiece (39) with tools (41) that are clamped in a tool spindle (17), and
c) removing and depositing the finished workpiece (40) with the workpiece gripper (36, 38).

11. The method according to claim 10, **characterized in that** in step b) the workpiece (39) clamped in the first jig (21) is transferred, after partial machining, to the second jig (25), where it is clamped and finished.

12. The method according to claim 11, **characterized in that** in step b) the workpiece (39) clamped in the first jig (21) is transferred to the second jig (25) by means of the workpiece gripper (36, 38).

13. The method according to claim 11, **characterized in that** in step b) the workpiece (39) clamped in the first jig (21) is transferred directly to the second jig (25), for which purpose both jigs (21, 25) are pivoted about an axis (22, 26) extending in a horizontal direction (14) and move towards one another in a second horizontal axis (24).

14. The method according to claim 12 or 13, **characterized in that** in step c) the finished workpiece (40) is removed from the second jig (25) with one of the two workpiece grippers (36, 38), and **in that** an unmachined workpiece (39) is introduced into the first jig (21) with the other of the two workpiece grippers (36, 38), 38), and **in that** then the one workpiece gripper (36, 38) deposits the machined workpiece (40) and the other workpiece gripper (36, 38) takes up an unmachined workpiece (42).

## Revendications

1. Machine-outil dotée d'au moins une broche porte-outil (17) orientée verticalement et équipée pour la réception d'outils (41), laquelle est déplaçable dans une direction verticale (18) et dans une première direction horizontale (14) orthogonale à la direction verticale (18), et dotée d'au moins un dispositif (21) servant au serrage de pièces (39) à usiner, le dispositif (21) étant déplaçable dans une deuxième direction horizontale (24) orthogonale à la première direction horizontale (14), la broche porte-outil (17) et le dispositif (21) étant disposés sur un bâti de machine (11) commun, et dotée d'un dispositif de transport de pièces (29), exactement une broche porte-outil (17) étant prévue, et le dispositif de transport de pièces (29) étant disposé sur le bâti de machine (11) et étant conçu pour introduire des pièces non usinées (39) dans le dispositif (21) et/ou pour retirer des pièces usinées (40) du dispositif (21), **caractérisée**
**en ce qu'**un deuxième dispositif (25) déplaçable dans la deuxième direction horizontale (24) est disposé sur le bâti de machine (11),
**en ce que** le dispositif de transport de pièces (29) présente une barre (32) s'étendant dans la deuxième direction horizontale (24), barre sur laquelle est montée au moins une unité de préhension (35) déplaçable dans la deuxième direction horizontale, laquelle unité présente un dispositif de préhension de pièces (36) déplaçable dans la direction verticale (18), et
**en ce qu'**une deuxième unité de préhension (37) déplaçable dans la deuxième direction horizontale (24) est montée sur la barre (32), laquelle deuxième unité de préhension présente un dispositif de préhension de pièces (38) monté déplaçable dans la direction verticale (18).

2. Machine-outil selon la revendication 1, **caractérisée en ce qu'**une barre de portique (12) fixe s'étendant dans la première direction horizontale (14) est disposée sur le bâti de machine (11), barre sur laquelle la broche porte-outil (17) est montée déplaçable dans la direction verticale et la première direction horizontale (14, 18).

3. Machine-outil selon la revendication 1 ou 2, **caractérisée en ce qu'**un guide (44, 45) s'étendant dans la deuxième direction horizontale (24) est disposé sur le bâti de machine (11), guide sur lequel les deux dispositifs (21, 25) sont montés.

4. Machine-outil selon l'une des revendications 1 à 3, **caractérisée en ce qu'**au moins l'un des deux dispositifs (21, 25) est pivotant autour d'un axe (22, 26) s'étendant horizontalement.

5. Machine-outil selon la revendication 4, **caractérisée en ce que** l'axe (22, 26) s'étendant horizontalement s'étend dans la première direction horizontale (14).

6. Machine-outil selon l'une des revendications 1 à 5, **caractérisée en ce qu'**au moins un magasin d'outils (28) disposé de manière fixe pour un échange d'outils dans le procédé de ramassage est prévu.

7. Machine-outil selon l'une des revendications 1 à 6, **caractérisée en ce que** la barre (32) est supportée sur le bâti de machine (11) par le biais d'au moins un montant (33).

8. Machine-outil selon l'une des revendications 1 à 7, **caractérisée en ce que** la barre (32) est supportée par le biais d'au moins un montant (34) dans la deuxième direction horizontale (24) à côté du bâti de machine (11).

9. Machine-outil selon l'une des revendications 1 à 8, **caractérisée en ce que** le dispositif de transport de pièces (29) est conçu pour introduire des pièces non usinées (39) dans le dispositif (21) et pour retirer des pièces usinées (40) du dispositif (21).

10. Procédé d'usinage d'une pièce (39) sur une machine-outil selon l'une des revendications 1 à 9, présentant les étapes suivantes :
a) saisie d'une pièce non usinée (39) à l'aide d'un dispositif de préhension de pièces (36, 38), introduction de la pièce (39) dans un premier dispositif (21), et serrage de la pièce (39) dans le premier dispositif (21),
b) usinage de la pièce (39) à l'aide d'outils (41) serrés dans une broche porte-outil (17), et
c) retrait et dépôt de la pièce (40) dont l'usinage a été achevé à l'aide du dispositif de préhension de pièces (36, 38).

11. Procédé selon la revendication 10, **caractérisé en ce qu'**à l'étape b), la pièce (39) serrée dans le premier dispositif (21) est, après un usinage partiel, transférée au deuxième dispositif (25), où elle est serrée et son usinage est achevé.

12. Procédé selon la revendication 11, **caractérisé en ce qu'**à l'étape b), la pièce (39) serrée dans le premier dispositif (21) est transférée au deuxième dispositif (25) au moyen du dispositif de préhension de pièces (36, 38).

13. Procédé selon la revendication 11, **caractérisé en ce qu'**à l'étape b), la pièce (39) serrée dans le premier dispositif (21) est transférée directement au deuxième dispositif (25), aux fins de quoi les deux dispositifs (21, 25) sont pivotés autour d'un axe (22, 26) s'étendant dans une direction horizontale (14) et se rapprochent l'un de l'autre le long d'un deuxième axe horizontal (24).

14. Procédé selon la revendication 12 ou 13, **caractérisé en ce qu'**à l'étape c), la pièce (40) dont l'usinage a été achevé est retirée du deuxième dispositif (25) à l'aide de l'un des deux dispositifs de préhension de pièces (36, 38) et une pièce non usinée (39) est introduite dans le premier dispositif (21) à l'aide de l'autre des deux dispositifs de préhension de pièces (36, 38), puis l'un des dispositifs de préhension de pièces (36, 38) dépose la pièce usinée (40) et l'autre dispositif de préhension de pièces (36, 38) reçoit une pièce non usinée (39).
